# EUROPEAN PATENT APPLICATION

(11) **EP 4 529 271 A1**
(43) Date of publication of application: **26.03.2025**
(21) Application number: 23909202.6
(22) Date of filing: 18.08.2023
(51) Int. Cl.: H04W 36/00

(54) **COMMUNICATION METHOD AND TERMINAL DEVICE**

(30) Priority: 28.12.2022 CN 202211698383
(71) Applicant: Honor Device Co., Ltd., Shenzhen, Guangdong 518040 (CN)
(72) Inventor: CHEN, Xiong, Shenzhen, Guangdong 518040 (CN)
(74) Representative: Goddar, Heinz J.
(86) International application number: PCT/CN2023/113760
(87) International publication number: WO 2024/139262

(57) **Abstract**

Embodiments of this application disclose a communication method and a terminal device, and relate to the communication field, so that a measurement report reported to a base station does not include an interfering cell. Therefore, handover to the interfering cell is avoided. Specific solutions are: receiving a first measurement event from the base station, where the first measurement event triggers the terminal to perform intra-RAT neighboring cell measurement; sending a first measurement report to the base station, where the first measurement report includes cell information of a third cell, and the first measurement report does not include cell information of a second cell; and receiving a first handover indication from the base station, and handing over to the third cell according to the first handover indication.

## Description

This application claims priority to Chinese Patent Application No. 202211698383.5, filed with the China National Intellectual Property Administration on December 28, 2022 and entitled "COMMUNICATION METHOD AND TERMINAL DEVICE", which is incorporated herein by reference in its entirety.

### TECHNICAL FIELD

Embodiments of this application relate to the communication field, and in particular, to a communication method and a terminal device.

### BACKGROUND

A terminal may perform wireless communication by accessing a cell corresponding to a base station.

The cell accessed by the terminal may be referred to as a camped cell. A cell whose coverage overlaps that of the camped cell may be referred to as a neighboring cell.

In some cases, modulo interference may occur between the neighboring cell and the camped cell, and therefore, communication quality of the terminal accessing the camped cell is affected.

### SUMMARY

Embodiments of this application provide a communication method and a terminal device, so that a measurement report reported to a base station does not include an interfering cell. Therefore, handover to the interfering cell is avoided.

To achieve the foregoing objective, the following technical solutions are used in the embodiments of this application.

According to a first aspect, a communication method is provided. The method is applied to a terminal, the terminal is located at a first location, the first location falls within signal coverage of a first cell, a second cell, and a third cell, and the second cell, the third cell, and the first cell are intra-RAT cells. The first cell is a currently camped cell of the terminal, and the second cell and the third cell are two neighboring cells of the first cell. Modulo interference exists between the second cell and the first cell, and no modulo interference exists between the third cell and the first cell. The method includes: receiving a first measurement event from a base station, where the first measurement event triggers the terminal to perform intra-RAT neighboring cell measurement; sending a first measurement report to the base station, where the first measurement report includes cell information of the third cell, and the first measurement report does not include cell information of the second cell; receiving a first handover indication from the base station, where the terminal device hands over the currently camped cell from the first cell to the third cell; and moving, by the terminal, to a second location, where the second location falls within signal coverage of the first cell, the third cell, and a fourth cell, the fourth cell and the first cell are intra-RAT cells, the terminal recamps on the first cell, no modulo interference exists between the first cell and the third cell, and no modulo interference exists between the first cell and the fourth cell. The method further includes: receiving a second measurement event from the base station, where the second measurement event triggers the terminal to perform intra-RAT neighboring cell measurement; and sending a second measurement report to the base station, where the second measurement report includes the cell information of the third cell and cell information of the fourth cell.

For example, a cell identity may include information such as a physical cell identifier PCI of a cell. The cell identity may be used to uniquely determine a cell. Based on the foregoing solution, a measurement report fed back to the base station may not carry cell information of an interfering cell. In this way, the base station may preferentially select, as a handover object of the terminal, a non-interfering cell carried in the measurement report. For example, the preferential selection process may be selecting a non-interfering cell with largest RSRP as the handover object of the terminal.

Optionally, before the sending a first measurement report to the base station, the method further includes: the terminal measures the second cell, the third cell, and the first cell, determines that the second cell is an interfering cell, and determines that the third cell is a non-interfering cell; and when determining that reference signal received power RSRP of the third cell is greater than RSRP of the first cell, and the RSRP of the third cell exceeds a first threshold, the terminal sends the first measurement report including a cell identity of the third cell.

Optionally, that the terminal measures the second cell, the third cell, and the first cell includes: the terminal measures RSRP of the second cell, the terminal measures the RSRP of the third cell, and the terminal measures the RSRP of the first cell.

Optionally, the determining that the second cell is an interfering cell includes: determining that modulo interference exists between the second cell and the first cell, obtaining cell quality parameters of the second cell and the first cell, and determining a network environment evaluation value of the second cell based on the cell quality parameters of the second cell and the first cell, where the cell quality parameter includes at least one of the following: RSRP, reference signal received quality RSRQ, a channel quality indicator CQI, a signal-to-noise ratio SNR, a block error rate BLER, and a cyclic redundancy check state CRC State, the network environment evaluation value is used to identify a signal difference degree between a neighboring cell and the first cell, and a larger network environment evaluation value identifies a smaller signal difference degree between the neighboring cell and the first cell; and determining that the network environment evaluation value of the second cell is greater than an interference threshold, and determining that the second cell is an interfering cell.

Therefore, whether a cell is an interfering cell may be evaluated by using a network environment evaluation value.

Optionally, the method further includes: excluding the cell information of the second cell from the first measurement report.

Optionally, the determining that the third cell is a non-interfering cell includes: determining that no modulo interference exists between the third cell and the first cell, and determining that the third cell is a non-interfering cell.

Optionally, the terminal is located at the first location, signal power of the first cell is first strength, the RSRP of the second cell is second strength, the RSRP of the third cell is third strength, a difference between the first strength and the second strength is less than a first strength threshold, the third strength is greater than the first strength, and a difference between the third strength and the first strength exceeds a second strength threshold.

In this example, cell handover to and camping on the third cell with larger RSRP are implemented.

Optionally, the terminal moves to a third location, the third location falls within the signal coverage of the first cell, the second cell, and the third cell, the terminal recamps on the first cell, modulo interference exists between the second cell and the first cell, and no modulo interference exists between the third cell and the first cell. The RSRP of the first cell is fourth strength. The RSRP of the second cell is fifth strength. The RSRP of the third cell is sixth strength. A difference between the fourth strength and the sixth strength is less than the first strength threshold. The fifth strength is greater than the fourth strength, and a difference between the fifth strength and the fourth strength exceeds the second strength threshold. The method further includes: receiving a third measurement event from the base station, where the third measurement event triggers the terminal to perform intra-RAT neighboring cell measurement; sending a third measurement report to the base station, where the third measurement report includes the cell information of the third cell and the cell information of the second cell; and receiving a second handover indication from the base station, and handing over to the second cell according to the second handover indication.

In this example, although modulo interference exists for the second cell, the RSRP of the second cell is greater than the RSRP of the first cell or the third cell. Therefore, when the terminal hands over to and camps on the second cell, better communication quality can also be obtained.

Optionally, the terminal moves to a fourth location, the fourth location falls within signal coverage of the first cell, the second cell, and a fifth cell, the terminal recamps on the first cell, modulo interference exists between the second cell and the first cell, and modulo interference exists between the fifth cell and the first cell. The method further includes: receiving a fourth measurement event from the base station, where the fourth measurement event triggers the terminal to perform intra-RAT neighboring cell measurement; and sending a fourth measurement report to the base station, where the fourth measurement report does not include the cell information of the second cell, and the fourth measurement report does not include cell information of the fifth cell.

Optionally, the terminal is located at the fourth location, and the RSRP of the first cell is seventh strength. The RSRP of the second cell is eighth strength. RSRP of the fifth cell is ninth strength. A difference between the seventh strength and the eighth strength is less than the first strength threshold. A difference between the seventh strength and the ninth strength is less than the first strength threshold.

Optionally, the method further includes: receiving a fifth measurement report from the base station, where the fifth measurement report triggers the terminal to perform inter-RAT measurement; sending a fifth measurement report to the base station, where the fifth measurement report includes cell information of a sixth cell, RSRP of the sixth cell is tenth strength, the tenth RSRP is greater than the seventh strength of the first cell, and a difference between the tenth RSRP and the seventh strength exceeds the second strength threshold; and receiving a third handover indication from the base station, and handing over to the sixth cell according to the third handover indication.

Optionally, a priority of the sixth cell is less than that of the first cell. For example, when the first cell is a 4G cell, the sixth cell may be a 3G cell.

Based on the solution example, when all cells with a same priority as the first cell are interfering cells, the terminal may camp on a network with a lower priority through fallback, to ensure a basic communication function.

Optionally, a 5G cell, a 4G cell, a 3G cell, and a 2G cell are in descending order of priorities of the cells, and the first cell is any one of the 5G cell, the 4G cell, and the 3G cell.

According to a second aspect, a communication method is provided. The method is applied to a terminal, and the method includes: the terminal receives a first measurement event from a base station; determines, through measurement based on the first measurement event, whether modulo interference exists between a currently camped cell and each of all neighboring cells; when no modulo interference exists between at least one first neighboring cell in all the neighboring cells and the currently camped cell, includes the at least one first neighboring cell in candidate neighboring cells; when modulo interference exists between at least one second neighboring cell in all the neighboring cells and the currently camped cell, and a difference between RSRP of the second neighboring cell and RSRP of the currently camped cell is greater than a second strength threshold, includes the at least one second neighboring cell in the candidate neighboring cells; when modulo interference exists between at least one third neighboring cell in all the neighboring cells and the currently camped cell, and a difference between RSRP of the third neighboring cell and the RSRP of the currently camped cell is less than a first strength threshold, includes the at least one third neighboring cell in interfering cells; and uploads a first measurement report when at least one candidate neighboring cell exists, RSRP of the candidate neighboring cell is greater than the RSRP of the currently camped cell, and the RSRP of the candidate neighboring cell is greater than a first threshold, where the first measurement report includes cell information of the at least one candidate neighboring cell, and the first measurement report does not include cell information of the interfering cell.

Optionally, after it is determined that modulo interference exists between the third neighboring cell and the currently camped cell, the method further includes: obtaining cell quality parameters of the third neighboring cell and the currently camped cell, and determining a network environment evaluation value of the third neighboring cell based on the cell quality parameters of the third neighboring cell and the currently camped cell, where the cell quality parameter includes at least one of the following: RSRP, reference signal received quality RSRQ, a channel quality indicator CQI, a signal-to-noise ratio SNR, a block error rate BLER, and a cyclic redundancy check state CRC State, the network environment evaluation value is used to identify a signal difference degree between a neighboring cell and the currently camped cell, and a larger network environment evaluation value identifies a smaller signal difference degree between the neighboring cell and the currently camped cell; and determining that the network environment evaluation value of the third neighboring cell is greater than an interference threshold, and determining that the third neighboring cell is an interfering cell.

According to a third aspect, a terminal device is provided. The terminal device is configured to perform cell handover according to the method provided in any one of the first aspect and the possible designs of the first aspect or any one of the second aspect and the possible designs of the second aspect.

According to a fourth aspect, a computer-readable storage medium is provided. The computer-readable storage medium includes computer instructions. When the computer instructions are run, the method provided in any one of the first aspect and the possible designs of the first aspect is performed, or the method provided in any one of the second aspect and the possible designs of the second aspect is performed.

According to a fifth aspect, a chip system is provided. The chip system includes an interface circuit and a processor. The interface circuit and the processor are interconnected by using a line. The interface circuit is configured to: receive a signal from a memory, and send the signal to the processor. The signal includes computer instructions stored in the memory. When the processor executes the computer instructions, the chip system disposed in a terminal device performs the method provided in any one of the first aspect and the possible designs of the first aspect, or performs the method provided in any one of the second aspect and the possible designs of the second aspect.

According to a sixth aspect, a computer-readable storage medium is provided. The computer-readable storage medium includes computer instructions. When the computer instructions are run, the method provided in any one of the first aspect and the possible designs of the first aspect is performed, or the method provided in any one of the second aspect and the possible designs of the second aspect is performed.

According to a seventh aspect, a computer program product is provided. The computer program product includes instructions. When the computer program product runs on a computer, the computer is enabled to perform, according to the instructions, the method provided in any one of the first aspect and the possible designs of the first aspect or the method provided in any one of the second aspect and the possible designs of the second aspect.

It should be understood that all technical features of the technical solutions provided in the second aspect to the seventh aspect can correspond to the method provided in the first aspect and the possible designs of the first aspect, and therefore similar beneficial effects can be achieved. Details are not described herein again.

### BRIEF DESCRIPTION OF DRAWINGS

FIG. 1 is a schematic diagram of accessing a cell by a terminal;
FIG. 2 is a schematic diagram in which a plurality of cells cover a terminal;
FIG. 3 is a schematic diagram of an RB pair;
FIG. 4 is a schematic diagram of a location of a CRS in an RB;
FIG. 5 is a schematic diagram of a communication scenario according to an embodiment of this application;
FIG. 6 is a schematic diagram of a communication scenario according to an embodiment of this application;
FIG. 7 is a schematic diagram of interaction of a communication method according to an embodiment of this application;
FIG. 8 is a schematic diagram of a communication scenario according to an embodiment of this application;
FIG. 9 is a schematic flowchart of determining an interfering cell according to an embodiment of this application;
FIG. 10 is a schematic diagram of a communication scenario according to an embodiment of this application;
FIG. 11 is a schematic diagram of interaction of a communication method according to an embodiment of this application;
FIG. 12 is a schematic diagram of a communication scenario according to an embodiment of this application;
FIG. 13 is a schematic diagram of a communication scenario according to an embodiment of this application;
FIG. 14 is a schematic diagram of interaction of a communication method according to an embodiment of this application;
FIG. 15 is a schematic flowchart of a cell reselection communication method according to an embodiment of this application;
FIG. 16 is a schematic diagram of sharing an interference list according to an embodiment of this application;
FIG. 17 is a schematic diagram of composition of a terminal device according to an embodiment of this application;
FIG. 18 is a schematic diagram of composition of a chip system according to an embodiment of this application; and
FIG. 19 is a schematic diagram of composition of a chip system according to an embodiment of this application.

### DESCRIPTION OF EMBODIMENTS

In the following descriptions, the terms "first" and "second" are used merely for the purpose of description, and shall not be construed as indicating or implying relative importance or implicitly indicating a quantity of indicated technical features. Therefore, a feature defined with "first" or "second" may explicitly or implicitly include one or more such features. In the descriptions of the embodiments, unless otherwise stated, "a plurality of" means two or more.

A terminal device (which may also be simply referred to as a terminal) may access a network through communication with a base station. The network may include a 2G network, a 3G (3rd Generation) network, a 4G (4th Generation) network, a 5G (5th Generation) network, and the like. The 4G network may further include an LTE network, and the 5G network may include an NR network and the like.

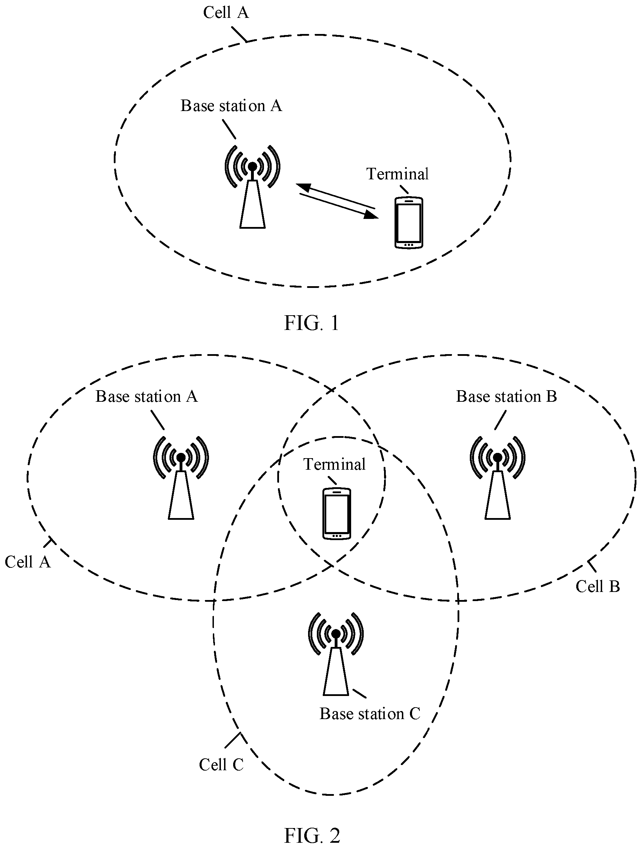

For example, reference is made to FIG. 1. When the terminal falls within a range of a cell A, the terminal may access the network through communication with a base station A corresponding to the cell A.

The LTE network is used as an example. The terminal may fall within coverage of a plurality of cells.

For example, reference is made to FIG. 2. An example in which the terminal is a mobile phone is used. A current location of the terminal may be covered by a cell A, a cell B, and a cell C. When the terminal needs to perform wireless communication, the terminal may select and camp on one of the cell A, the cell B, and the cell C, to implement access to the LTE network. In some implementations, the cell A may correspond to a base station A, the cell B may correspond to a base station B, and the cell C may correspond to a base station C.

In this embodiment of this application, a cell on which the terminal currently camps may be referred to as a camped cell. A cell that is adjacent to the camped cell and whose coverage includes the current location of the terminal is referred to as a neighboring cell.

For example, reference is made to FIG. 1. An example in which the terminal camps on the cell A is used. In this case, the cell A is a camped cell, and the cell B and the cell C are neighboring cells.

If modulo interference exists between the camped cell and the neighboring cell, communication quality of the terminal is affected. The following describes the modulo interference.

For example, if locations of cell common reference signals (Cell Reference Signal, CRS) of the camped cell and a neighboring cell in a resource block (Resource Block, RB) are the same, modulo interference exists between the camped cell and the neighboring cell. The CRS may be determined based on information such as a physical cell identifier (Physical Cell Identifier, PCI) of a cell.

The LTE network is used as an example.

A communication process between the terminal and a base station corresponding to the cell may be performed based on the RB. Composition of the RB may be separately described from a time domain perspective and a frequency domain perspective.

From the frequency domain perspective, one RB may include 12 contiguous subcarriers (subcarrier).

From the time domain perspective, each subframe may include two slots (slot). It may be understood that in the LTE network, a time domain length of one subframe may be 1 ms, and a time domain length of one slot may be 0.5 ms. In other words, one subframe includes two slots. Each slot may correspond to one RB. One subframe may include an RB pair (RB pair) including two RBs. Each slot may include seven symbols (symbol). Each symbol may correspond to one resource element (Resource Element, RE). Correspondingly, one RB may include, in time domain, one slot corresponding to seven symbols. It should be noted that an orthogonal frequency-division multiplexing (Orthogonal frequency-division multiplexing, OFDM) technology is used in the LTE network, and seven symbols in each slot may also be referred to as seven OFDM symbols.

When the terminal communicates with the base station, different information may be carried on the RE. Therefore, information transmission is implemented by sending and/or receiving the RB.

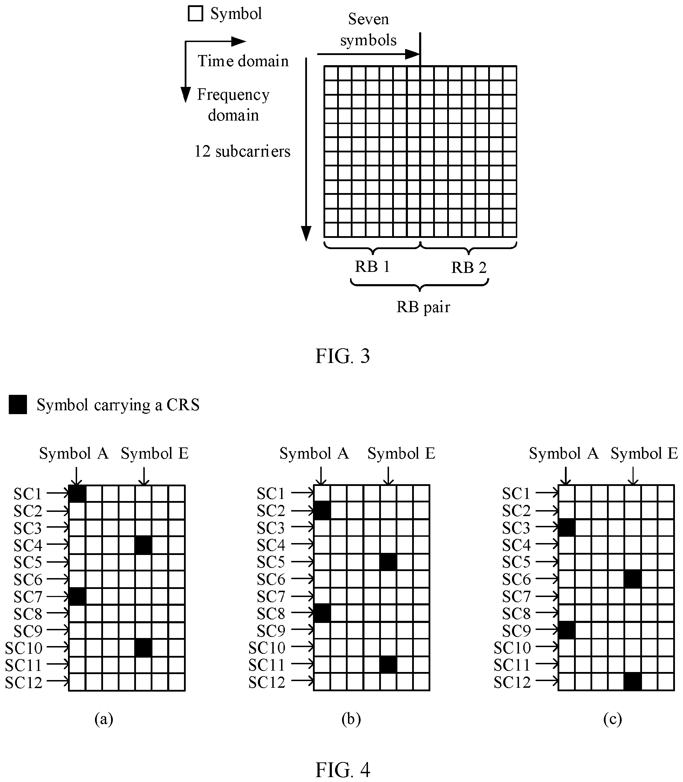

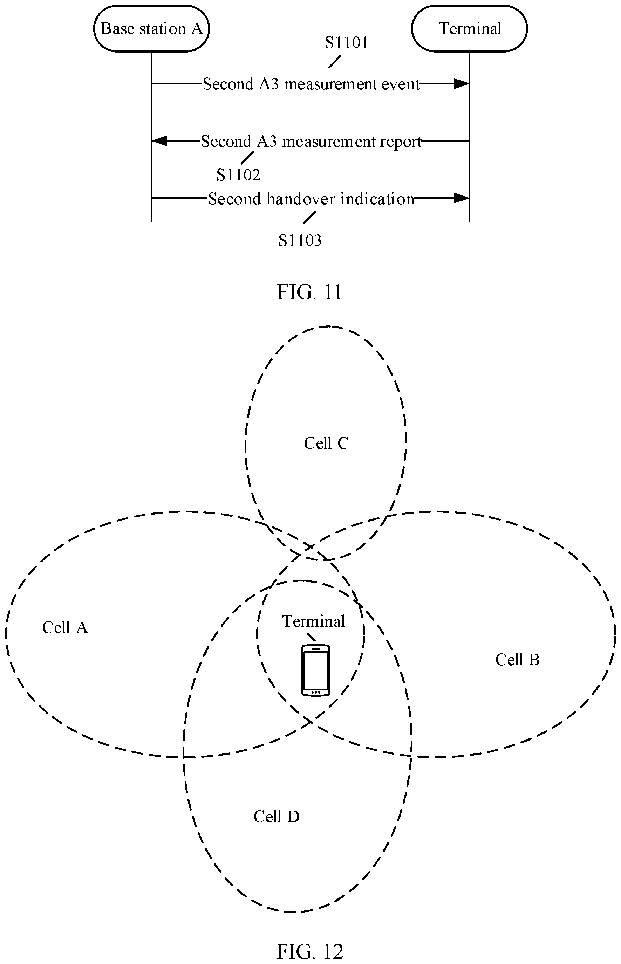

With reference to FIG. 3, FIG. 3 is a schematic diagram of an RB. Each square corresponds to one RE. In the example in FIG. 3, 12 rows of REs may be included in a longitudinal direction (frequency domain), and correspond to 12 subcarriers in frequency domain. Seven symbols may be included in a horizontal direction (time domain).

The example in FIG. 3 shows a time domain distribution status of one RB pair. For example, the RB pair may include an RB 1 and an RB 2. The RB 1 and the RB 2 each may include seven symbols in time domain. An RB pair of one subframe may include 14 symbols in time domain.

In the LTE protocol, a location of a CRS in an RB is specified: There are four CRSs in each RB. In frequency domain, there is one CRS per six subcarriers. In time domain, the CRS is located in the first symbol or the fifth symbol in a slot.

Based on this, either RB in the RB pair in FIG. 3 is used as an example. FIG. 4 are three possible schematic diagrams of a location of a CRS in an RB. 12 subcarriers in the RB are SC1-SC12. Seven symbols included in each slot may include a symbol A-a symbol G. In this way, the first symbol may be the symbol A, and the fifth symbol may be the symbol E.
(a) in FIG. 4 is a schematic diagram of a location at which a CRS is carried in an RB. In this example, CRSs may be carried in a symbol A of SC1, a symbol E of SC4, a symbol A of SC7, and a symbol E of SC10.
(b) in FIG. 4 is another schematic diagram of a location at which a CRS is carried in an RB. In this example, CRSs may be carried in a symbol A of SC2, a symbol E of SC5, a symbol A of SC8, and a symbol E of SC11.
(c) in FIG. 4 is still another schematic diagram of a location at which a CRS is carried in an RB. In this example, CRSs may be carried in a symbol A of SC3, a symbol E of SC6, a symbol A of SC9, and a symbol E of SC12.

When the terminal performs CRS transmission with the base station A, the CRS may be carried, by using any implementation in FIG. 4, in a corresponding location in the RB for transmission.

If a location of a CRS used by the camped cell is the same as a location of a CRS used by a neighboring cell, modulo interference occurs between the two cells.

For example, reference is made to the scenario example in FIG. 2 and the descriptions in FIG. 4. For example, the camped cell is the cell A, and locations of CRSs used by the cell A are shown in (a) in FIG. 4.

When locations of CRSs used by the cell B are the same as the locations shown in (a) in FIG. 4, modulo interference exists between the cell B and the cell A.

Similarly, when locations of CRSs used by the cell C are the same as the locations shown in (a) in FIG. 4, modulo interference exists between the cell C and the cell A.

In a modulo interference determining form, the terminal may determine, based on PCIs of different cells, whether modulo interference exists between two cells. If remainders of PCIs of the two cells divided by 3 are the same, modulo interference exists between the two cells. On the contrary, if remainders of PCIs of the two cells divided by 3 are different, no modulo interference exists between the two cells.

For example, reference is further made to the scenario example shown in FIG. 2. An example in which the camped cell is the cell A is used.

The terminal receives a CRS-A sent by the base station A, and further obtains a PCI-A corresponding to the cell A. For example, the PCI-A is 345, and a corresponding remainder of the PCI-A divided by 3 is 0.

The terminal receives a CRS-B sent by the base station B, and further obtains a PCI-B corresponding to the cell B. For example, the PCI-B is 348, and a corresponding remainder of the PCI-B divided by 3 is 0. Modulo interference exists between the cell A and the cell B.

The terminal receives a CRS-C sent by the base station C, and further obtains a PCI-C corresponding to the cell C. For example, the PCI-C is 346, and a corresponding remainder of the PCI-C divided by 3 is 1. No modulo interference exists between the cell A and the cell C.

In all of the foregoing examples, the LTE network is used as an example. In the LTE network, modulo interference may be referred to as MOD3 (MOD3) interference.

Correspondingly, modulo interference may also exist in the NR network. For example, the modulo interference in the NR network may include MOD30 interference, MOD60 interference, and the like.

Therefore, because of impact of modulo interference on communication quality, when the terminal needs to perform cell handover (or cell reselection), handover to an interfering cell needs to be avoided, so that communication quality degradation caused by modulo interference is avoided. The interfering cell may include a neighboring cell that has modulo interference with the currently camped cell.

To resolve the foregoing problem, the embodiments of this application provide a communication method. In the solution, when communication quality of a currently camped cell degrades, a terminal can avoid camping on a neighboring cell that has modulo interference with the camped cell and whose interference level is equivalent to an interference level of the camped cell.

For example, the terminal may obtain an environment interference evaluation value of a neighboring cell based on a cell quality parameter of the neighboring cell and a cell quality parameter of the camped cell. The cell quality parameter may include at least one of the following: reference signal received power (Reference Signal Receiving Power, RSRP), reference signal received quality (Reference Signal Receiving Quality, RSRQ), a channel quality indicator (Channel Quality Indicator, CQI), a signal-to-noise ratio (Signal-to-noise ratio, SNR), a block error rate (block error rate, BLER), and a cyclic redundancy check state (CRC State).

The technical solution provided in the embodiments of this application is described below in detail with reference to the accompanying drawings.

For example, the solution provided in the embodiments of this application may be applied to a communication system.

The communication system may include at least one terminal device and a plurality of cells. Coverage areas of at least two of the plurality of cells at least partially overlap each other, and the at least two cells include a currently camped cell.

It should be noted that one base station can provide at least one cell for wireless coverage. In this embodiment of this application, an example in which one cell corresponds to one base station is used. For example, with reference to the example in FIG. 2, a cell A may correspond to a base station A, a cell B may correspond to a base station B, and a cell C may correspond to a base station C.

It should be noted that communication quality of the camped cell changes during movement of the terminal. For example, the communication quality may be identified by signal strength (for example, RSRP) of the camped cell that is received by the terminal. When the communication quality of the camped cell degrades, the signal strength of the cell that is received by the terminal correspondingly decreases.

The terminal may hand over to and camp on, through cell handover or cell reselection, a neighboring cell for communication, to obtain better communication quality.

The cell handover process may include: the terminal hands over to and camps on a neighboring cell under an indication of a base station of the camped cell.

The cell reselection process may include: the terminal selects a neighboring cell, and hands over the camped cell to the selected neighboring cell to access a network.

The following first uses cell handover as an example to describe the solution provided in the embodiments of this application.

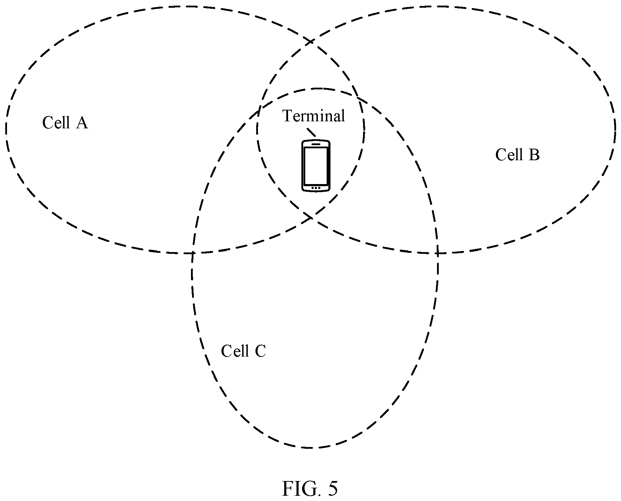

With reference to FIG. 5, FIG. 5 is a schematic diagram of a communication scenario according to an embodiment of this application.

In this example, a terminal currently falls within coverage of a cell A, a cell B, and a cell C. A camped cell is the cell A. The cell B and the cell C are neighboring cells. In this application, the cell A may be referred to as a first cell. The cell B may also be referred to as a second cell, and the cell C may be referred to as a third cell.

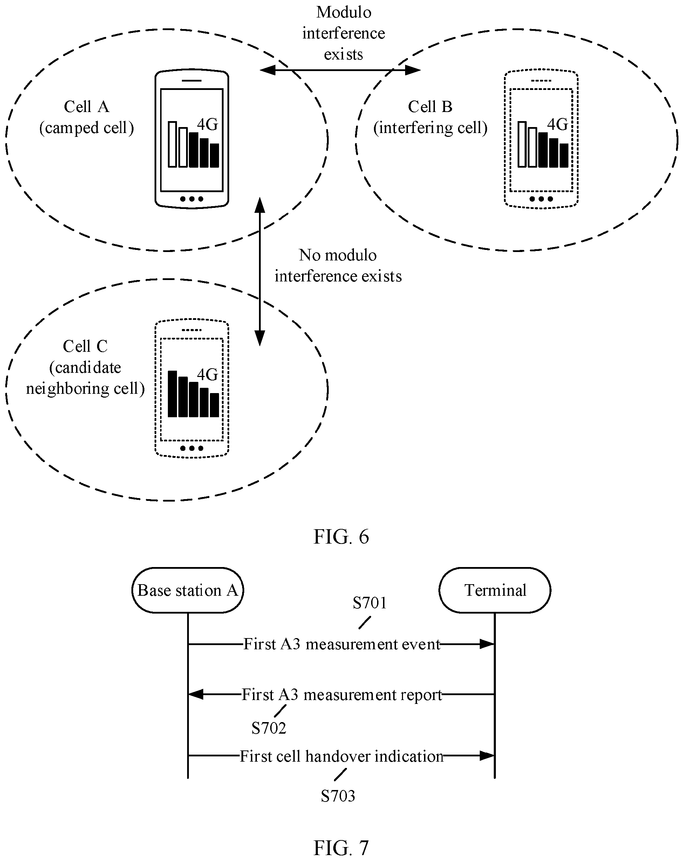

With reference to FIG. 6, FIG. 6 shows an example of communication quality of the cells and an inter-cell interference status in this example.

As shown in FIG. 6, all of the cell A, the cell B, and the cell C are 4G cells.

In this application, a cell that provides 4G network communication may be referred to as a 4G cell. Similarly, a cell that provides 3G network communication may be referred to as a 3G cell. A cell that provides 5G network communication may be referred to as a 5G cell. The plurality of cells (all of which are, for example, 4G cells, 3G cells, or 5G cells) that provide a same network may be referred to as intra-RAT cells.

Modulo interference exists between the cell A and the cell B. No modulo interference exists between the cell A and the cell C. Signal strength provided by the cell A for the terminal is equivalent to signal strength provided by the cell B, and signal strength provided by the cell C for the terminal is greater than the signal strength provided by the cell A or the cell B. For example, in the example in FIG. 6, the signal strength of the cell A may be first strength. The signal strength of the cell B is second strength. The signal strength of the cell C is third strength. The first strength is equivalent to the second strength. For example, a difference between the first strength and the second strength is less than a first strength threshold. The third strength is greater than the first strength or the second strength. For example, the third strength is greater than the first strength, and a difference between the third strength and the first strength exceeds a second strength threshold. For another example, the third strength is greater than the second strength, and a difference between the third strength and the second strength exceeds a second strength threshold.

The communication method provided in the embodiments of this application is described below with reference to the scenario examples in FIG. 5 and FIG. 6.

With reference to FIG. 7, FIG. 7 is a schematic diagram of interaction of a communication method according to an embodiment of this application. It may be understood that because a currently camped cell is a cell A, a base station A corresponding to the cell A may communicate with a terminal to implement cell handover.

Based on the solution, the terminal can avoid handing over to a cell B and instead hand over to a cell C. In this way, the cell C for which no modulo interference exists is used as a new camped cell of the terminal, and provides a communication service for the terminal.

As shown in FIG. 7, the solution may include the following steps.

S701: The base station A delivers a first A3 measurement event to the terminal.

The first A3 measurement event corresponds to an event A3. The event A3 (Event A3) is used to trigger intra-frequency measurement to be performed on a neighboring cell of a same network RAT as the camped cell. A measurement report is uploaded when an RSRP value of the neighboring cell is greater than RSRP of the camped cell and the RSRP value of the neighboring cell exceeds a first threshold. In some embodiments, the first A3 measurement event may also be referred to as a first measurement event.

In this example, with reference to the example in FIG. 6, the camped cell is a 4G cell. Correspondingly, the first A3 measurement event may be used to trigger the terminal to perform 4G cell measurement.

In a possible implementation, the first A3 measurement event may be delivered by the base station A to the terminal by using an RRC connection reconfiguration (RRC Connection Reconfiguration) message.

In some embodiments, before delivering the first A3 measurement event, the base station A may further deliver a first A2 measurement event to the terminal.

The first A2 measurement event corresponds to an event A2. The event A2 (Event A2) is used to trigger measurement to be performed on the camped cell. A measurement report is uploaded when an RSRP value of the camped cell is less than a second threshold.

In response to the first A2 measurement event, the terminal may measure the RSRP of the camped cell (for example, the cell A). When RSRP of the cell Ais less than the second threshold, the terminal uploads a first A2 measurement report corresponding to the first A2 measurement event. The first A2 measurement report may include information such as a PCI and the RSRP of the cell A.

It may be understood that the base station A may receive the first A2 measurement report when the RSRP value of the camped cell is less than the second threshold. That the RSRP value of the camped cell is less than the second threshold corresponds to relatively poor communication quality of the camped cell. In this case, the base station A may perform S701 to indicate the terminal to enable intra-RAT neighboring cell measurement, so that when a neighboring cell can provide better communication quality, the terminal is indicated to hand over to the neighboring cell for camping.

S702: The terminal feeds back a first A3 measurement report to the base station A.

With reference to the descriptions in S701, after receiving the first A3 measurement event, the terminal may send the first A3 measurement report when the RSRP value of the neighboring cell is greater than the RSRP of the camped cell and the RSRP value of the neighboring cell exceeds the first threshold. In some embodiments, the first A3 measurement report may also be referred to as a first measurement report. In this application, the first measurement report is a measurement report corresponding to the first measurement event.

For example, the first A3 measurement report may include cell information of at least one candidate neighboring cell.

The scenario shown in FIG. 6 is used as an example. Modulo interference exists between the cell B and the cell A, and signal strength of the cell B is equivalent to signal strength of the cell A. As described above, a difference between first strength and second strength is less than a first strength threshold. The cell B is an interfering cell. In this scenario, no modulo interference exists between the cell C and the cell A, and signal strength of the cell C is greater than the signal strength of the cell A. As described above, third strength is greater than the first strength, and a difference between the third strength and the first strength exceeds a second strength threshold.

The candidate neighboring cell may include the cell C, and does not include the cell B. Correspondingly, the first A3 measurement report may include cell information of the cell C. The first A3 measurement report may not include cell information of the cell B.

The cell information may be used to indicate a corresponding cell. The base station and/or the terminal may uniquely determine the corresponding cell based on the cell information.

In some embodiments, cell information of a cell may include a PCI and a location area code (location area code, LAC) of the cell.

In some other embodiments, cell information of a cell may include a PCI and a LAC of the cell and at least one of the following parameters: a downlink frequency (DL FREQ), an uplink frequency (UL FREQ), downlink bandwidth (DL Bandwidth), uplink bandwidth (UL Bandwidth), a cell identity (Cell Identity), a tracking area code (Tracking area code), a frequency band indicator (Freq Band Indicator), a mobile country code (Mobile Country Code, MCC), multi-task network cascades (Multi-task Network Cascades, MNC), and a number of multi-task network cascades (Number of MNC digits).

The candidate neighboring cell is a cell to which the terminal device can hand over, and may be a neighboring cell that can provide better communication quality in all neighboring cells.

In this embodiment of this application, if modulo interference exists between a neighboring cell and the camped cell, and signal strength of the neighboring cell is equivalent to signal strength of the camped cell, the neighboring cell cannot provide better communication quality for the terminal. The neighboring cell that cannot provide better communication quality for the terminal may be referred to as an interfering cell or an interfering neighboring cell.

The candidate neighboring cell that can provide better communication quality may include a non-interfering cell in all the neighboring cells.

It should be noted that in the foregoing example, the solution of determining the interfering cell by using a signal strength difference between cells is only an example. In some other embodiments, the terminal may alternatively determine the interfering cell based on a cell communication parameter of a cell.

For example, the cell communication parameter may include at least one of the following: RSRP, reference signal received quality (Reference Signal Receiving Quality, RSRQ), a channel quality indicator (Channel Quality Indicator, CQI), a signal-to-noise ratio (Signal-to-noise ratio, SNR), a block error rate (block error rate, BLER), and a cyclic redundancy check state (CRC State).

A specific implementation in which the terminal determines the interfering cell based on the cell communication parameter is described in detail later.

S703: The base station A sends a first cell handover indication to the terminal.

For example, the base station A may send the first cell handover indication to the terminal when determining, based on the first A3 measurement report, that a handover condition is met.

With reference to the descriptions in S702, the first A3 measurement report may include the cell information of the at least one candidate neighboring cell determined by the terminal. For example, the first A3 measurement report may include the cell information of the cell C.

In this case, the base station A may send the first cell handover indication to the terminal, where the first cell handover indication is used to indicate the terminal to hand over to and camp on the cell C. The terminal may hand over from the cell A to the cell C and camp on the cell C in response to the first cell handover indication.

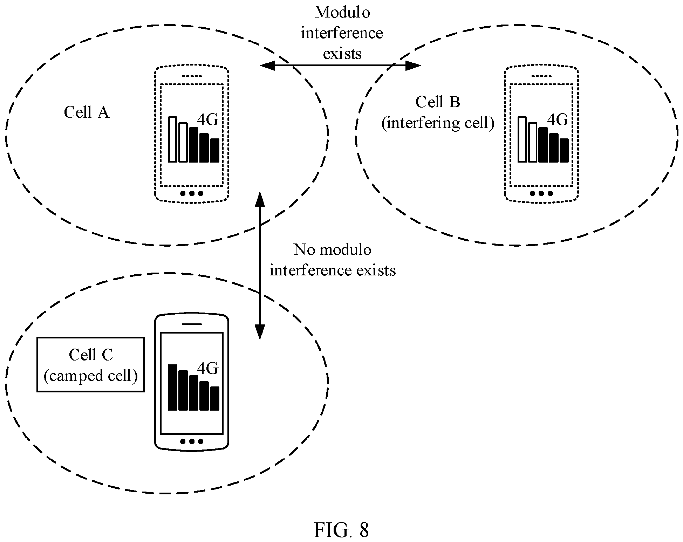

In this way, in the communication scenarios shown in FIG. 5 and FIG. 6, the terminal may hand over from the cell A to the cell C and camp on the cell C under an indication of the base station A. Modulo interference exists between the cell A and the cell B, and no modulo interference exists between the cell A and the cell C. In this case, the corresponding signal strength of the cell A for the terminal and signal strength of the cell B for the terminal are less than the signal strength of the cell C for the terminal. Therefore, an effect shown in FIG. 8 is obtained by implementing the solution shown in FIG. 7. In other words, the terminal can camp on the cell C with better signal strength under an indication of the base station to perform communication, so that better communication quality is obtained.

It should be noted that with reference to the descriptions in S702, in some embodiments, the terminal may determine the interfering cell based on the cell communication parameter. Further, the non-interfering cell in all the neighboring cells is used as a candidate neighboring cell, and is carried in the first A3 measurement report and reported to the base station.

With reference to the scenario in FIG. 6, the following describes, by using an example, a specific implementation in which the terminal determines the interfering cell (or the candidate neighboring cell) based on the cell communication parameter in this application.

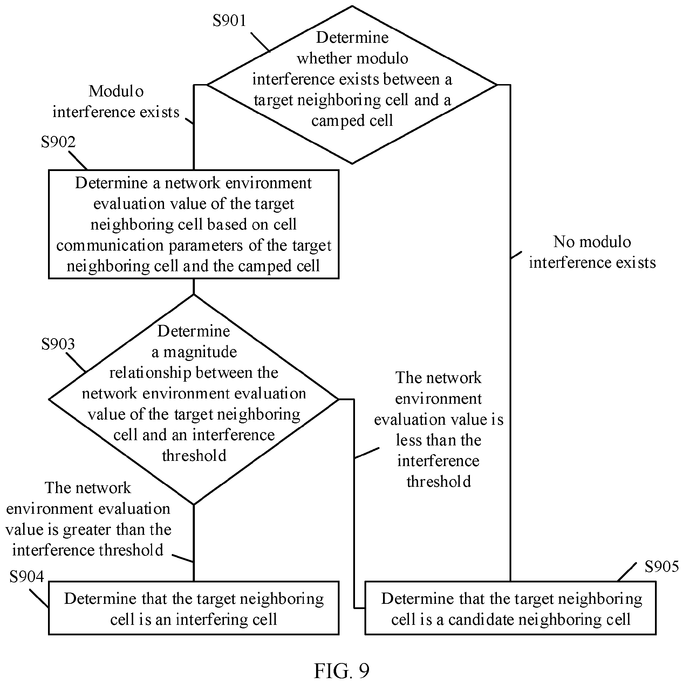

With reference to FIG. 9, FIG. 9 is a schematic flowchart of a communication method according to an embodiment of this application. In the solution, a terminal may determine, based on cell communication parameters of cells, a network environment evaluation value corresponding to each neighboring cell, and determine, based on the network environment evaluation value, whether the neighboring cell is an interfering cell. The terminal may execute the following solution shown in FIG. 9 for each neighboring cell to determine whether the neighboring cell (for example, a target neighboring cell) is an interfering cell.

As shown in FIG. 9, the solution may include the following steps.

S901: Determine whether modulo interference exists between the target neighboring cell and a camped cell.

If modulo interference exists between the target neighboring cell and the camped cell, the following S902 is performed. If no modulo interference exists between the target neighboring cell and the camped cell, the following S905 is performed.

For example, the terminal may perform S901 after receiving the first A3 measurement event shown in S701 in FIG. 7.

The target neighboring cell may be each of a plurality of neighboring cells. For example, with reference to FIG. 5, target neighboring cells may be a cell B and a cell C.

The terminal may determine, based on cell information of the camped cell and cell information of the target neighboring cell, whether modulo interference exists between the target neighboring cell and the camped cell.

In some embodiments, an LTE network is used as an example, and modulo interference may include MOD3 interference. When a remainder of a PCI of the target neighboring cell divided by 3 is the same as a remainder of a PCI of the camped cell divided by 3, MOD3 interference exists between the target neighboring cell and the camped cell. The terminal may continue to perform an operation in the following S902 on a cell for which modulo interference exists.

With reference to the scenarios in FIG. 5 and FIG. 6, an example in which the target neighboring cell is the cell B is used.

When a remainder of a PCI of the cell B divided by 3 is the same as that of a PCI of the cell A divided by 3, the terminal may determine that MOD3 interference exists between the cell B and the cell A. In this case, the terminal may continue to perform the operation in the following S902 on the cell B.

In some other embodiments, an LTE network is used as an example, and modulo interference may include MOD3 interference. When a remainder of a PCI of the target neighboring cell divided by 3 is different from a remainder of a PCI of the camped cell divided by 3, no MOD3 interference exists between the target neighboring cell and the camped cell. The terminal may jump to S905 and perform S905 on a cell for which no modulo interference exists.

With reference to the scenarios in FIG. 5 and FIG. 6, an example in which the target neighboring cell is the cell C is used.

When a remainder of a PCI of the cell C divided by 3 is different from that of a PCI of the cell A divided by 3, the terminal may determine that no MOD3 interference exists between the cell C and the cell A. In this case, the terminal may continue to perform an operation in the following S905 on the cell C.

S902: Determine a network environment evaluation value of the target neighboring cell based on cell communication parameters of the target neighboring cell and the camped cell.

With reference to the descriptions in S901, the terminal may perform S902 when modulo interference exists for the target neighboring cell.

For example, the terminal may measure the camped cell to obtain a cell communication parameter of the camped cell. The terminal may further measure the target neighboring cell to obtain a cell communication parameter of the target neighboring cell. The cell communication parameter may include at least one of the following: RSRP, reference signal received quality (Reference Signal Receiving Quality, RSRQ), a channel quality indicator (Channel Quality Indicator, CQI), a signal-to-noise ratio (Signal-to-noise ratio, SNR), a block error rate (block error rate, BLER), and a cyclic redundancy check state (CRC State).

The terminal may determine the network environment evaluation value of the target neighboring cell based on the cell communication parameters of the target neighboring cell and the camped cell.

In this application, the network environment evaluation value may be used to identify a signal difference degree between the target cell and the camped cell. A smaller signal difference between the target cell and the camped cell indicates a larger corresponding network environment evaluation value. On the contrary, a larger signal difference between the target cell and the camped cell indicates a smaller corresponding network environment evaluation value.

In an example, the network environment evaluation value includes RSRP, RSRQ, a CQI, an SNR, a BLER, and a CRC State.

A weight K_{RSRP} corresponding to the RSRP, a weight K_{RSRQ} corresponding to the RSRQ, a weight _{CQI} corresponding to the CQI, a weight K_{SNR} corresponding to the SNR, a weight K_{BLER} corresponding to the BLER, and a weight K_{CRC State} corresponding to the CRC State may be set in the terminal.

The terminal may calculate the network environment evaluation value of the target neighboring cell according to the following formula (1): Network environment evaluation value=△RSRP×KRSRP+△RSRQ×KRSRQ+△CQI×KCQI+△SNR×KSNR+△BLER×KBLER+△CRC State×KCRC State.

△RSRP is an absolute value of a difference between RSRP of the camped cell and RSRP of the target neighboring cell. △RSRQ is an absolute value of a difference between RSRQ of the camped cell and RSRQ of the target neighboring cell. △CQI is an absolute value of a difference between a CQI of the camped cell and a CQI of the target neighboring cell. △SNR is an absolute value of a difference between an SNR of the camped cell and an SNR of the target neighboring cell. △BLER is an absolute value of a difference between a BLER of the camped cell and a BLER of the target neighboring cell. △CRC State is an absolute value of a difference between a CRC State of the camped cell and a CRC State of the target neighboring cell.

In some embodiments, the weights of the network environment evaluation values may be set based on corresponding different difference intervals.

RSRP is used as an example. When △RSRP is less than 1 dBm, the corresponding weight K_{RSRP} may be 1.5. When △RSRP is greater than 2 dBm, the corresponding weight K_{RSRP} may be 1.45.

With reference to the scenarios in FIG. 5 and FIG. 6, an example in which the target neighboring cell is the cell B is used.

With reference to the formula (1), the terminal may determine a network environment evaluation value of the cell B according to the following formula (2). Network environment evaluation valueB=(RSRPB-RSRPA)×KRSRP+(RSRQB-RSRQA)×KRSRQ+(CQIB-CQIA)×KCQI+(SNRB-SNRA)×KSNR+(BLERB-BLERA)×KBLER+(CRC StateB-CRC StateA)×KCRC State.

The network environment evaluation value_{B} is the network environment evaluation value of the cell B. RSRP_{A} is RSRP of the cell A. RSRP_{B} is RSRP of the cell B. RSRQ_{A} is RSRQ of the cell A. RSRQ_{B} is RSRQ of the cell B. CQI_{A} is a CQI of the cell A. CQI_{B} is a CQI of the cell B. SNR_{A} is an SNR of the cell A. SNR_{B} is an SNR of the cell B. BLER_{A} is a BLER of the cell A. BLER_{B} is a BLER of the cell B. CRC State_{A} is a CRC State of the cell A. CRC State_{B} is a CRC State of the cell B.

It should be noted that in the calculation example of the foregoing formula (2), calculation is performed by using an example in which a cell communication parameter of the cell A is subtracted from a cell communication parameter of the cell B. In some embodiments, if the cell communication parameter of the cell B is less than the cell communication parameter of the cell A, a corresponding cell communication parameter difference may be calculated by using an absolute value of a difference between the cell communication parameter of the cell B and the cell communication parameter of the cell A.

In this way, the network environment evaluation value of the cell B can be calculated. It may be understood that in some other scenarios, if neighboring cells further include other cells that have modulo interference with the camped cell, for each cell for which modulo interference exists, the terminal may calculate a network environment evaluation value of the cell according to the foregoing formula (1).

S903: Determine a magnitude relationship between the network environment evaluation value of the target neighboring cell and an interference threshold.

If the network environment evaluation value of the target neighboring cell is greater than the interference threshold, the following S904 is performed. If the network environment evaluation value of the target neighboring cell is less than the interference threshold, the following S905 is performed.

For example, the interference threshold may be preset in the terminal. The interference threshold may alternatively be obtained by the terminal by using a cloud server.

With reference to the scenarios in FIG. 5 and FIG. 6, an example in which the target neighboring cell is the cell B is used.

The terminal may determine a magnitude relationship between the network environment evaluation value_{B} of the cell B and the interference threshold. When the network environment evaluation value_{B} is greater than the interference threshold, relatively large interference exists for the cell B. The terminal may jump to the following S904 and perform the following S904 on the cell B.

S904: Determine that the target neighboring cell is an interfering cell.

For example, when modulo interference exists between the target cell and the camped cell, and the network environment evaluation value of the target cell is greater than the interference threshold, the terminal determines that the target cell is an interfering cell, and removes the target cell from candidate neighboring cells.

With reference to the scenarios in FIG. 5 and FIG. 6, when modulo interference exists between the cell B and the cell A, and the network environment evaluation value_{B} is greater than the interference threshold, the cell B is an interfering cell. The terminal may determine that the cell B does not belong to the candidate neighboring cells.

In some embodiments of this application, when the target cell is an interfering cell, the terminal may generate an interference list. The interference list includes cell information of the interfering cell. In some embodiments, the interference list may further include information such as a location of the current terminal and the network environment evaluation value of the target cell.

For example, the cell B is an interfering cell. The terminal may add information such as cell information of the cell B, the location of the current terminal, and the network environment evaluation value of the cell B to the interference list.

The terminal may no longer access the cell in the interference list within preset duration. Therefore, cell handover efficiency is improved.

In some implementations, the terminal may further report the interference list to the cloud server in real time/periodically. The cloud server may share the interference list with another terminal, so that the another terminal can quickly and accurately perform cell handover or cell reselection based on the interference list.

S905: Determine that the target neighboring cell is a candidate neighboring cell.

For example, in some embodiments, when no modulo interference exists between the target cell and the camped cell, the terminal determines that the target cell is a non-interfering cell, and the target cell may be included in the candidate neighboring cells.

Reference is made to the descriptions in S901. An example in which the target cell is the cell C is used. No modulo interference exists between the cell C and the cell A. The terminal may determine that the cell C belongs to the candidate neighboring cells.

In the foregoing examples of the scenarios in FIG. 6 and FIG. 7, a first A3 measurement report may include cell information of the cell C, and does not include the cell information of the cell B. Modulo interference does not exist for the cell C, modulo interference exists for the cell B, and signal strength of the cell B is equivalent to that signal strength of the cell A. Based on a similar determining mechanism, when the terminal moves from a location (for example, a first location) shown in FIG. 7 to a second location, the second location falls within coverage of the cell A (namely, a first cell), the cell C (namely, a third cell), and a fourth cell, and no modulo interference exists for the third cell and the fourth cell, the corresponding A3 measurement report may carry both cell information of the third cell and cell information of the fourth cell.

For example, after the terminal moves to the second location and recamps on the cell A, similar to the example in FIG. 7, a base station A may send a second measurement event to the terminal. In some embodiments, similar to a first measurement event, the second measurement event is an A3 measurement event. The terminal may perform interfering cell determining according to the solution shown in FIG. 9, to determine that both the cell B and the fourth cell are non-interfering cells. In other words, both the cell B and the fourth cell are candidate neighboring cells. In this way, when a threshold requirement of the A3 measurement event is met, the terminal may send, to the base station A, a second measurement report carrying a cell identity of a second cell (namely, the cell B) and a cell identity of the fourth cell. The second measurement report corresponds to the second measurement event, and may be an A3 measurement report. Therefore, the base station A may preferentially select, based on the cell identities in the second measurement report, a cell for the terminal for camping.

It should be noted that in some other embodiments of this application, when modulo interference exists between the target cell and the camped cell, and the network environment evaluation value of the target cell is less than the interference threshold, the terminal determines that the target cell is a non-interfering cell, and the target cell may be included in the candidate neighboring cells.

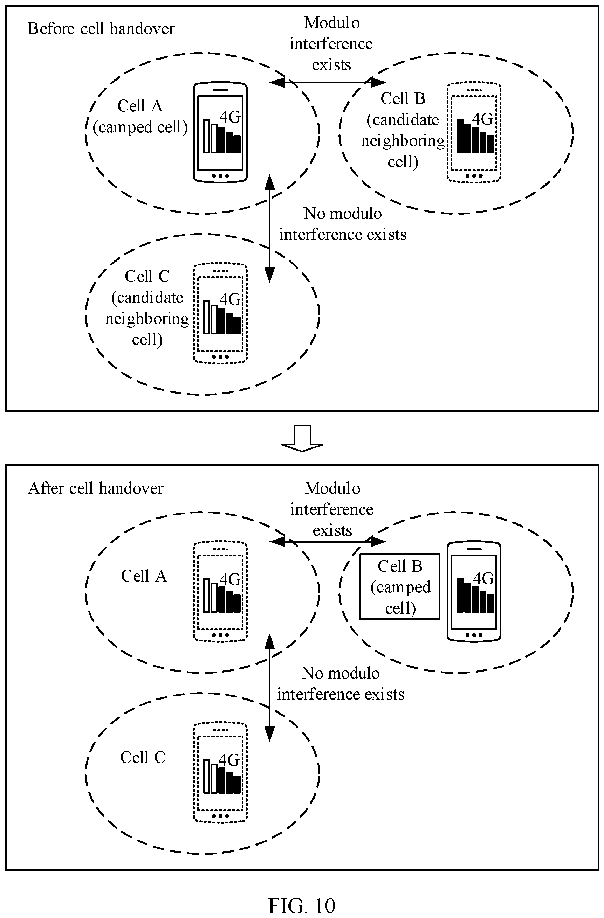

For example, reference is made to the scenario examples in FIG. 5 and FIG. 6. With reference to FIG. 10, the terminal may recamp on the cell A. The neighboring cells may include the cell B and the cell C.

In the example in FIG. 10, modulo interference exists between the cell B and the cell A, and no modulo interference exists between the cell A and the cell C. The signal strength of the cell A is equivalent to signal strength of the cell C. Unlike the example in FIG. 6, in this example, the signal strength of the cell B is greater than the signal strength of the cell A.

For example, in the example in FIG. 10, the signal strength of the cell A may be fourth strength. The signal strength of the cell B is fifth strength. The signal strength of the cell C is sixth strength. The fourth strength is equivalent to the sixth strength. For example, a difference between the fourth strength and the sixth strength is less than a first strength threshold. The fifth strength is greater than the fourth strength or the sixth strength. For example, the fifth strength is greater than the fourth strength, and a difference between the fifth strength and the fourth strength exceeds a second strength threshold. For another example, the fifth strength is greater than the sixth strength, and a difference between the fifth strength and the sixth strength exceeds a second strength threshold.

It should be noted that although the terminal can receive signals of the cell A, the cell B, and the cell C in the scenario shown in FIG. 10, a location of the terminal may be different from a location in the scenario shown in FIG. 8 or FIG. 6. For example, in the solution implementation shown in FIG. 10, the terminal may be located at a third location. At the third location, the terminal may hand over to and camp on the cell B with higher signal strength according to the following solution shown in FIG. 11.

In some embodiments, the terminal may move from the first location to the third location. In some other embodiments, the terminal may move from another location to the third location. In some other embodiments, the terminal may always be located at the third location.

For example, in the scenario shown in FIG. 10, FIG. 11 provides an interaction example of still another communication method according to this application. In the solution shown in FIG. 11, when a terminal needs to perform cell handover, the terminal may hand over to and camp on a cell B under an indication of a base station A.

As shown in FIG. 11, the solution may include the following steps.

S1101: The base station A delivers a second A3 measurement event to the terminal.

For execution of S1101, reference may be made to S701 in FIG. 7. Similar to a first A3 measurement event, the second A3 measurement event corresponds to an event A3, and may be used to trigger intra-frequency measurement to be performed on neighboring cells of a same network RAT as a camped cell. The terminal uploads a measurement report when an RSRP value of a neighboring cell is greater than RSRP of the camped cell and the RSRP value of the neighboring cell exceeds a first threshold. In this application, the second A3 measurement event may be referred to as a third measurement event.

S1102: The terminal sends a second A3 measurement report to the base station A.

The second A3 measurement report may be a measurement report corresponding to the second A3 measurement event. The second A3 measurement report may be referred to as a third measurement report.

The second A3 measurement report may include cell information of a candidate neighboring cell determined by the terminal in the scenario shown in FIG. 10.

For example, for a specific implementation in which the terminal determines the candidate neighboring cell (or an interfering cell), reference may be made to the descriptions of S702 in FIG. 7 and the solution descriptions in FIG. 9.

Reference is made to the scenario example in FIG. 10. No modulo interference exists between a cell C and a cell A. Therefore, the cell C may be used as one of candidate neighboring cells. Modulo interference exists between the cell B and the cell A, but a signal strength difference between the cell B and the cell A is relatively large (for example, fifth strength is greater than fourth strength, and a difference between the fifth strength and the fourth strength exceeds a second strength threshold), and a corresponding network environment evaluation value is less than an interference threshold. In this case, the cell B may also be used as one of the candidate neighboring cells.

In this way, in this example, the second A3 measurement report may include both cell information of the cell C and cell information of the cell B.

S1103: The base station A delivers a second handover indication to the terminal.

For example, the second handover indication may be used to indicate the terminal to perform cell handover, to hand over to and camp on one of the candidate neighboring cells.

In some embodiments, the base station A may indicate, based on the second A3 measurement report, the terminal to hand over to a cell with relatively large signal strength in the candidate neighboring cells.

For example, with reference to FIG. 10, the base station A may determine, based on the second A3 measurement report, that the candidate neighboring cells include the cell B and the cell C. Because the signal strength of the cell C is close to the signal strength of the cell A, and signal strength of the cell B is greater than the signal strength of the cell A, the base station may indicate, by using the second handover indication, the terminal to hand over to and camp on the cell B. In this way, an effect existing after the cell handover in FIG. 10 is achieved.

In the foregoing examples shown in FIG. 6-FIG. 11, the communication environment shown in FIG. 5 is used as an example to describe cases in which the terminal performs cell handover and the terminal performs cell handover after moving.

It can be learned that in the solutions shown in FIG. 6-FIG. 11, a communication environment in which the terminal is currently located may include a plurality of 4G cells. The plurality of 4G cells may include a candidate neighboring cell described in the implementation of the solution shown in FIG. 9.

In this case, the terminal may perform intra-RAT cell handover under an indication of the base station A. In this embodiment of this application, a solution in which the terminal hands over to an intra-RAT cell with higher signal strength by using the communication method provided in FIG. 6-FIG. 11 may also be referred to as level-1 self-healing of the terminal device.

In some other embodiments of this application, if there is no candidate neighboring cell that meets a requirement (the determining mechanism shown in FIG. 9) in intra-RAT cells, the terminal may trigger level-2 self-healing to communicate through handover to a cell with a lower priority. Therefore, a basic communication requirement is met.

The cell with a lower priority may correspond to a cell with a higher priority. 2G, 3G, 4G, and 5G cells are used as examples. The 5G cell, the 4G cell, the 3G cell, and the 2G cell are in descending order of priorities.

For example, reference is made to the communication scenario example in FIG. 12. The terminal may move to a fourth location. The fourth location may fall within coverage of the cell A, the cell B, and a cell D. All of the cell A, the cell B, and the cell D are 4G cells. As shown in FIG. 12, in this example, the terminal may not fall within coverage of the cell C. An example in which the cell A is the camped cell is further used. In this example, the cell D may also be referred to as a fifth cell. In some embodiments, the terminal may move from a first location, a second location, or a third location to the fourth location. In some other embodiments, the terminal may move from another location to the fourth location. In some other embodiments, the terminal may always be located at the fourth location.

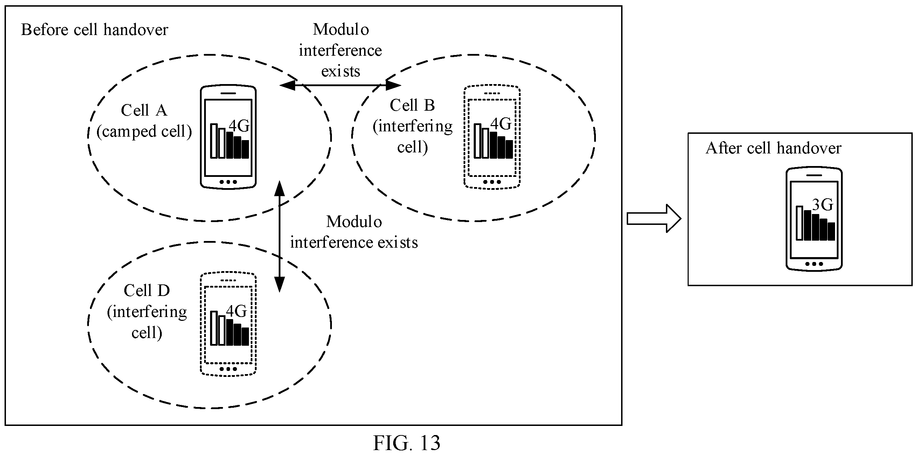

Reference is made to FIG. 13. In the communication scenario shown in FIG. 12, modulo interference exists between the cell A and the cell B, and the signal strength of the cell A is equivalent to the signal strength of the cell B. Modulo interference also exists between the cell A and the cell D, and signal strength of the cell A and the cell D is equivalent. In other words, both the cell B and the cell D are interfering cells, and there is no candidate neighboring cell.

For example, at the fourth location, the signal strength of the cell A is seventh strength. The signal strength of the cell B is eighth strength. Signal strength of the cell D is ninth strength. The seventh strength, the eighth strength, and the ninth strength are equivalent. For example, a difference between the seventh strength and the eighth strength is less than a first strength threshold. A difference between the seventh strength and the ninth strength is less than the first strength threshold.

For the scenario shown in FIG. 13, an embodiment of this application further provides a communication method. In the communication solution, when determining, in a same RAT, that there is no candidate neighboring cell, a terminal can hand over to a network with a lower priority under control of a base station A. In some embodiments, the network with a lower priority may be a 3G network. Signal strength of a cell corresponding to the 3G network may be greater than signal strength of a cell A. Therefore, a basic communication requirement of the terminal is ensured.

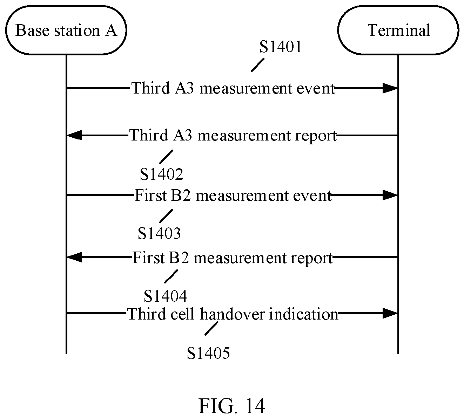

With reference to FIG. 14, FIG. 14 is a schematic diagram of interaction of a communication method according to an embodiment of this application. The solution can support a terminal in performing the cell handover shown in FIG. 13.

As shown in FIG. 14, the solution may include the following steps.

S1401: A base station A delivers a third A3 measurement event to the terminal.

For example, for execution of S1401, reference may be made to the foregoing solution shown in FIG. 7 or FIG. 11. Details are not described herein again. In some implementations, the third A3 measurement event may also be referred to as a fourth measurement event.

S1402: The terminal feeds back a third A3 measurement report to the base station A.

With reference to the foregoing example in FIG. 7 or FIG. 11, after the terminal receives the third A3 measurement event, the terminal may determine an interfering cell and a candidate neighboring cell in neighboring cells according to the solution shown in FIG. 9. In some implementations, the third A3 measurement report may also be referred to as a fourth measurement report.

In this example, all cells in a same RAT as a camped cell are interfering cells. The third A3 measurement report may not include cell information of the candidate neighboring cell.

For example, in the scenario example in FIG. 12 or FIG. 13, both a cell B and a cell D in the neighboring cells are interfering cells. The terminal may perform intra-RAT measurement based on the third A3 measurement event. Reference is made to the solution descriptions in FIG. 9. In the scenario shown in FIG. 13, modulo interference exists between the cell B and a cell A, and an environment interference evaluation value of the cell B is greater than an interference threshold. Correspondingly, the terminal determines that the cell B is an interfering cell. Similarly, for the cell D, modulo interference exists between the cell D and the cell A, and an environment interference evaluation value of the cell D is greater than the interference threshold. Correspondingly, the terminal determines that the cell D is an interfering cell.

In this way, the terminal determines that all the current neighboring cells are interfering cells and there is no candidate neighboring cell. The third A3 report may not carry the cell information of the candidate neighboring cell.

S1403: The base station A delivers a first B2 measurement event to the terminal.

The first B2 measurement event corresponds to an event B2. The event B2 (Event B2) may be used to trigger measurement to be performed on an inter-RAT cell with a same priority or a lower priority. The terminal uploads a measurement report when RSRP of the camped cell is less than a third threshold and RSRP of the inter-RAT neighboring cell is greater than a fourth threshold. In this application, the first B2 measurement event may also be referred to as a fifth measurement event.

For example, with reference to FIG. 13, if the currently camped cell (the cell A) is in a 4G network, the first B2 measurement event may be used to indicate the terminal to measure a cell in a 3G network.

In some embodiments, before delivering the first B2 measurement event, the base station A may deliver a first B1 measurement event to the terminal. The first B1 measurement event corresponds to an event B1. The event B1 (Event B1) may be used to trigger measurement to be performed on a high-priority inter-RAT cell. The terminal uploads a measurement report when RSRP of the neighboring cell is greater than a fifth threshold.

For example, with reference to FIG. 13, if the cell A is in the 4G network, the first B1 measurement event may be used to indicate the terminal to measure a cell in a 5G network.

When a cell measurement result of the 5G network is relatively poor or no suitable 5G cell is available for access, the base station may perform S1403, to deliver the first B2 measurement event to the terminal.

S1404: The terminal feeds back a first B2 measurement report to the base station A.

The terminal may measure a network whose priority is less than a priority of the currently camped cell. In this application, the first B2 measurement report may also be referred to as a fifth measurement report.

For example, with reference to FIG. 13, the currently camped cell is the cell A. The cell A is a 4G cell. After receiving the first B2 measurement event, the terminal may measure a cell in the 3G network.

The first B2 measurement report may include cell information of a cell that can access the 3G network. For example, the cell that can access the 3G network may be a sixth cell. In some embodiments, signal strength of the cell that can access the 3G network may be greater than signal strength of the cell A or the cell B. For example, the signal strength of the sixth cell is tenth strength. The tenth strength may be greater than seventh strength of the cell A. For example, the tenth strength is greater than the seventh strength, and a difference between the tenth strength and the seventh strength exceeds a second strength threshold.

S1405: The base station A sends a third cell handover indication to the terminal.

The base station A indicates, by using the third cell handover indication, the terminal to access the 3G network through fallback. Therefore, a basic communication function of the terminal is ensured.

It may be understood that in the solution implementation depicted in FIG. 13 and FIG. 14, when there is no candidate neighboring cell, the terminal may hand over to a lower priority (for example, hand over from the 4G network to the 3G network) under an indication of the base station A to perform communication. In other words, level-2 self-healing is triggered, to ensure basic communication of the terminal in a scenario of a relatively poor current network.

It should be noted that the foregoing solution descriptions in FIG. 6-FIG. 14 are all described by using an example in which a camped cell change is implemented through cell handover. In a cell reselection mechanism, according to the communication solution provided in this application, the terminal can also trigger level-1 self-healing or level-2 self-healing based on a current environment, to ensure communication quality.

The following describes, with reference to the accompanying drawings, a mechanism in which the solution is applied to a cell reselection process.

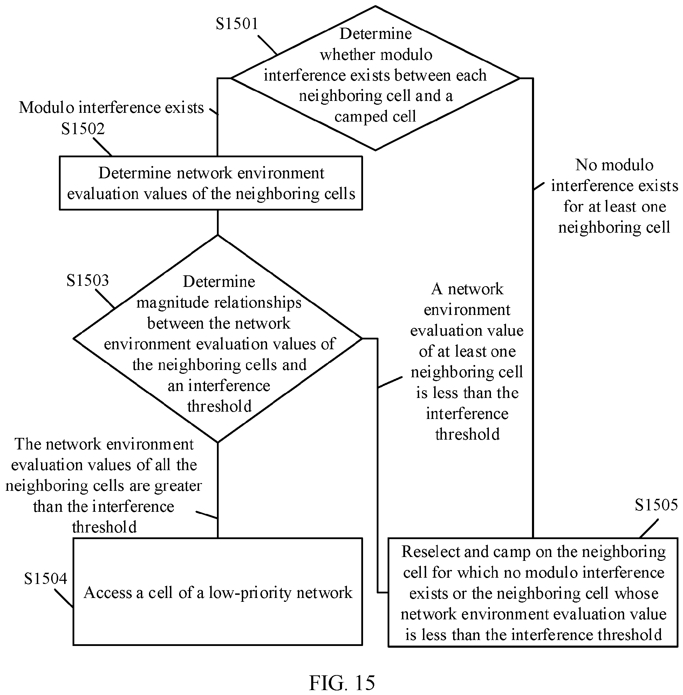

As shown in FIG. 15, the solution may include the following steps.

S1501: Determine whether modulo interference exists between each neighboring cell and a camped cell.

When modulo interference exists for all the neighboring cells, the following S1502 is performed. When no modulo interference exists for at least one neighboring cell, the following S1505 is performed.

S1502: Determine network environment evaluation values of the neighboring cells.

S1503: Determine magnitude relationships between the network environment evaluation values of the neighboring cells and an interference threshold.

When the network environment evaluation values of all the neighboring cells are greater than the interference threshold, S1504 is performed. When a network environment evaluation value of at least one neighboring cell is less than the interference threshold, S1505 is performed.

For execution of the foregoing S1501-S1503, reference may be made to the steps of 9 and the descriptions thereof. Details are not described again.

In this example, a terminal may reselect a cell with better quality based on a cell reselection mechanism for camping.

S1504: The terminal accesses a cell of a low-priority network.

Reference is made to the scenario example in FIG. 13. When all 4G cells are interfering cells, the terminal may camp on a cell of a 3G network through cell reselection. In other words, level-2 self-healing is triggered, and therefore, a basic communication function is ensured.

S1505: The terminal reselects and camps on the neighboring cell for which no modulo interference exists or the neighboring cell whose network environment evaluation value is less than the interference threshold.

For example, in some embodiments, reference is made to the example in FIG. 8. An example in which the neighboring cell for which no modulo interference exists is a cell C is used.

The terminal may access, through cell reselection, the neighboring cell (namely, the cell C) for which no modulo interference exists, and camp on the neighboring cell.

In some other embodiments, reference is made to the example in FIG. 10. An example in which a second cell is a cell B is used.

The terminal may access, through cell reselection, the neighboring cell (namely, the cell B) whose network environment evaluation value is less than the interference threshold, and camp on the neighboring cell.

With reference to the descriptions in FIG. 9, in an implementation process of the solution shown in FIG. 15, the terminal may also store cell information of each interfering cell in an interference list.

The terminal may no longer camp, within subsequent preset duration based on the interference list, on the cells recorded in the interference list. Therefore, communication quality is ensured.

In some embodiments, after recording the cell information of the interfering cell in the interference list, the terminal may further send the interference list to a cloud server through synchronization, so that the interference list is used as a reference when another terminal determines a camped cell.

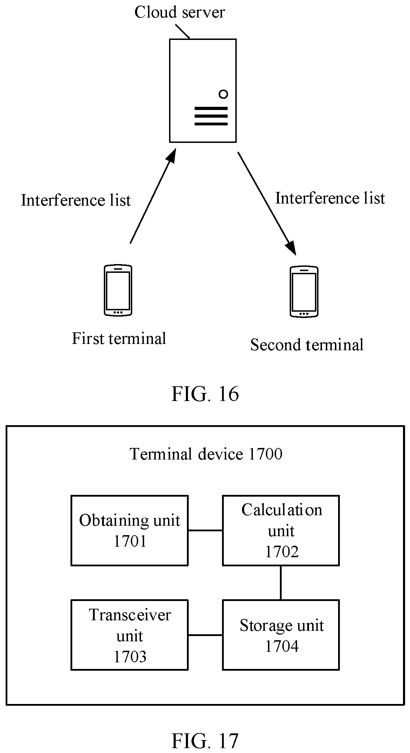

For example, reference is made to FIG. 16. In this scenario, a first terminal may perform cell handover or cell reselection according to any one of the solutions shown in FIG. 6-FIG. 15. In this process, the first terminal may generate an interference list.

For example, the first terminal currently camps on a cell A, and a network environment evaluation value of the cell B used as a neighboring cell is greater than the interference threshold. The interference list may include cell information of the cell B. In some embodiments, the interference list may further include cell information of the currently camped cell (for example, the cell A).

The first terminal may update the interference list to the cloud server in real time or periodically.

A second terminal connected to the cloud server may obtain the interference list.

For example, in some embodiments, the second terminal may obtain the interference list from the cloud server when the second terminal needs to perform cell reselection or cell handover. In some other embodiments, the second terminal may obtain the interference list from the cloud server in real time or periodically, so that the second terminal quickly invokes the interference list during cell handover or cell reselection.

For example, the interference list obtained by the second terminal may include the cell information of the cell A and the cell B.

When performing cell handover, the second terminal may exclude the cell A and the cell B from candidate neighboring cells, and interact, according to the solution shown in FIG. 7, with a base station corresponding to the camped cell, to access another cell under an indication of the base station to perform communication.

When performing cell reselection, the second terminal may determine, based on the interference list, that interference exists for the cell A and the cell B and the cell A and the cell B cannot provide a better communication service. Optionally, the second terminal may hand over to another cell or RAT according to the solution shown in FIG. 15 to perform communication.

It should be noted that in the foregoing example, the communication method provided in the embodiments of this application is described in detail by using the terminal as an execution body.

In different implementations, a specific implementation of the terminal may be different. For example, the terminal may include any one of a desktop computer, a laptop computer, a handheld computer, a notebook computer, a vehicle-mounted device, an ultra-mobile personal computer (ultra-mobile personal computer, UMPC), a netbook, a cellular phone, a personal digital assistant (personal digital assistant, PDA), an augmented reality (augmented reality, AR)\virtual reality (virtual reality, VR) device, and the like. A specific form of the terminal is not specially limited in the embodiments of this application.

It may be understood that to implement the foregoing functions, the terminal device provided in the embodiments of this application includes corresponding hardware structures and/or software modules for performing the functions. A person skilled in the art may be easily aware that, in combination with example units and algorithm steps described in the embodiments disclosed in this specification, the embodiments of this application can be implemented by hardware or a combination of hardware and computer software. Whether a specific function is performed by hardware or hardware driven by computer software depends on a particular application and a design constraint of the technical solutions. A person skilled in the art may use different methods to implement the described functions for each particular application, but it should not be considered that the implementation goes beyond the scope of the embodiments of this application.

In the embodiments of this application, the terminal device may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that division into the modules in the embodiments of this application is an example, and is merely logical function division. In actual implementation, there may be another division manner.

In an example, FIG. 17 is a schematic diagram of composition of a terminal device 1700.

The terminal device 1700 may be configured to support the terminal device in implementing the foregoing communication method provided in any one of FIG. 7-FIG. 14.

For example, as shown in FIG. 17, the terminal device 1700 may include:
an obtaining unit 1701, a calculation unit 1702, a storage unit 1704, and a transceiver unit 1703.

The obtaining unit 1701 may be configured to obtain cell quality parameters of a currently camped cell and each neighboring cell. The calculation unit 1702 may be configured to calculate, based on the cell quality parameters of the currently camped cell and each neighboring cell, an environment interference evaluation value corresponding to each neighboring cell. After the calculation unit 1702 obtains the interference evaluation value corresponding to each neighboring cell, the interference evaluation value corresponding to each neighboring cell may be stored in the storage unit 1704. In some embodiments, an interference list may be set in the storage unit 1704, and the interference list may be used to store cell information of the currently camped cell and a neighboring cell whose environment interference evaluation value is greater than an interference threshold.

The transceiver unit 1703 may be configured to perform data communication with another device. For example, in some embodiments, the transceiver unit 1703 may be configured to receive a measurement event from a base station. The transceiver unit 1703 may be configured to send a measurement report to the base station. The measurement report may include cell information of a candidate neighboring cell. The transceiver unit 1703 may be further configured to receive a cell handover indication from the base station. In some other embodiments, the transceiver unit 1703 may be configured to: send the interference list to a cloud server and/or receive the interference list, and store the interference list in the storage unit 1704.

In some implementations, the calculation unit 1702 may be a processor or a controller. For example, the calculation unit 1702 may be a central processing unit (central processing unit, CPU), a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The processor may include an application processor and a baseband processor. The processor may implement or execute various example logical blocks, modules, and circuits described with reference to content disclosed in this application. The processor may alternatively be a combination that implements a computing function, for example, a combination of one or more microprocessors or a combination of a DSP and a microprocessor. The storage unit 1704 may be a memory.

FIG. 17 provides an example of composition of the terminal device. In some embodiments, the units shown in FIG. 17 may alternatively be disposed on a chip in the terminal device.

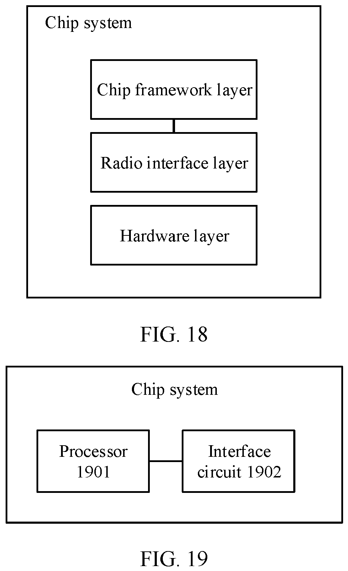

For example, in some embodiments, with reference to FIG. 18, FIG. 18 is a schematic diagram of composition of a chip system. In this example, the chip system may be divided into different layers, and the layers have different functions, and are configured to cooperate with each other, to enable the chip system to implement the foregoing communication method provided in any one of FIG. 7- FIG. 14.

The chip system may include a chip framework layer. In an implementation, all of the obtaining unit 1701, the calculation unit 1702, and the transceiver unit 1703 shown in FIG. 17 may be disposed in the chip framework layer.

The chip system may include a radio interface layer. The radio interface layer Radio interface layer is simply referred to as an RIL layer. The radio interface layer may be configured to provide a plurality of interfaces, to implement transfer of a command in the chip framework layer from/to another component in the chip system.

The chip system may include a hardware layer. For example, the hardware layer may include a modem (modem).

In some embodiments, a storage medium (for example, corresponding to the storage unit 1704 in FIG. 17) may be further disposed in the hardware layer of the chip system. The storage medium may be configured to provide an on-chip storage function. For example, the storage medium may be configured to store data such as a cell quality parameter of each cell, an interference list, and an interference threshold.

For division of another chip system, reference is made to FIG. 19. The chip system includes at least one processor 1901 and at least one interface circuit 1902. The processor 1901 and the interface circuit 1902 may be connected by using a line. For example, the interface circuit 1902 may be configured to receive a signal from another apparatus (for example, a memory of an electronic device). For another example, the interface circuit 1902 may be configured to send a signal to another apparatus (for example, the processor 1901). For example, the interface circuit 1902 may read instructions stored in the memory, and send the instructions to the processor 1901. When the instructions are executed by the processor 1901, the electronic device may be enabled to perform steps in the foregoing embodiments. Certainly, the chip system may further include another discrete device. This is not specifically limited in this embodiment of this application.

An embodiment of this application further provides a computer storage medium. The computer storage medium includes computer instructions. When the computer instructions are run on the foregoing electronic device, the electronic device is enabled to perform the functions or steps performed by the mobile phone in the foregoing method embodiments.

An embodiment of this application further provides a computer program product. When the computer program product runs on a computer, the computer is enabled to perform the functions or steps performed by the mobile phone in the foregoing method embodiments.

It can be clearly learned by a person skilled in the art from the foregoing descriptions of the implementations that for convenience and brevity of description, only division into the foregoing functional modules is used as an example for description. In actual application, the foregoing functions may be allocated to different functional modules for implementation based on a requirement, in other words, an internal structure of an apparatus is divided into different functional modules, to complete all or some of the functions described above.

In the several embodiments provided in this application, it should be understood that the disclosed apparatus and method may be implemented in another manner. For example, the apparatus embodiments described above are merely examples. For example, division into modules or units is merely logical function division. In actual implementation, there may be another division manner. For example, a plurality of units or components may be combined or integrated into another apparatus, or some features may be ignored or not performed. In addition, the displayed or discussed mutual couplings, direct couplings, or communication connections may be implemented by using some interfaces. The indirect couplings or communication connections between the apparatuses or units may be implemented in an electrical form, a mechanical form, or another form.

The units described as separate parts may or may not be physically separate, and parts displayed as units may be one or more physical units, in other words, may be located in one place, or may be distributed in a plurality of different places. Some or all of the units may be selected based on actual requirements to achieve the objectives of the solutions in the embodiments.

In addition, the functional units in the embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions of the embodiments of this application essentially, or the part contributing to the conventional technology, or all or some of the technical solutions may be implemented in a form of a software product. The software product is stored in a storage medium and includes several instructions for enabling a device (which may be a single-chip microcomputer, a chip, or the like) or a processor (processor) to perform all or some of the steps of the methods described in the embodiments of this application. The foregoing storage medium includes various media that can store program code, for example, a USB flash drive, a removable hard disk, a read-only memory (read only memory, ROM), a random access memory (random access memory, RAM), a magnetic disk, or an optical disc.

The foregoing content is merely specific implementations of this application, but is not intended to limit the protection scope of this application. Any variation or replacement made within the technical scope disclosed in this application shall fall within the protection scope of this application. Therefore, the protection scope of this application shall be subject to the protection scope of the claims.

## Claims

1. A communication method, wherein the method is applied to a terminal device, the terminal device is located at a first location, the first location falls within signal coverage of a first cell, a second cell, and a third cell, and the second cell, the third cell, and the first cell are intra-RAT cells; the first cell is a currently camped cell of the terminal device, and the second cell and the third cell are two neighboring cells of the first cell; and modulo interference exists between the second cell and the first cell, and no modulo interference exists between the third cell and the first cell; and
the method comprises:
receiving a first measurement event from a base station, wherein the first measurement event triggers the terminal device to perform intra-RAT neighboring cell measurement;
sending a first measurement report to the base station, wherein the first measurement report comprises cell information of the third cell, and the first measurement report does not comprise cell information of the second cell;
receiving a first handover indication from the base station, wherein the terminal device hands over the currently camped cell from the first cell to the third cell; and
moving, by the terminal device, to a second location, wherein the second location falls within signal coverage of the first cell, the third cell, and a fourth cell, the fourth cell and the first cell are intra-RAT cells, the terminal device recamps on the first cell, no modulo interference exists between the first cell and the third cell, and no modulo interference exists between the first cell and the fourth cell; and the method further comprises:
receiving a second measurement event from the base station, wherein the second measurement event triggers the terminal device to perform intra-RAT neighboring cell measurement; and
sending a second measurement report to the base station, wherein the second measurement report comprises the cell information of the third cell and cell information of the fourth cell.

2. The method according to claim 1, wherein before the sending a first measurement report to the base station, the method further comprises:
measuring, by the terminal device, the second cell, the third cell, and the first cell;
determining that the second cell is an interfering cell, and determining that the third cell is a non-interfering cell; and
when determining that reference signal received power RSRP of the third cell is greater than RSRP of the first cell, and the RSRP of the third cell exceeds a first threshold, sending, by the terminal device, the first measurement report comprising a cell identity of the third cell.

3. The method according to claim 2, wherein the measuring, by the terminal device, the second cell, the third cell, and the first cell comprises:
measuring, by the terminal device, RSRP of the second cell, measuring, by the terminal device, the RSRP of the third cell, and measuring, by the terminal device, the RSRP of the first cell.

4. The method according to claim 2 or 3, wherein the determining that the second cell is an interfering cell comprises:
determining that modulo interference exists between the second cell and the first cell;
obtaining cell quality parameters of the second cell and the first cell, and determining a network environment evaluation value of the second cell based on the cell quality parameters of the second cell and the first cell, wherein the cell quality parameter comprises at least one of the following: RSRP, reference signal received quality RSRQ, a channel quality indicator CQI, a signal-to-noise ratio SNR, a block error rate BLER, and a cyclic redundancy check state CRC State, the network environment evaluation value is used to identify a signal difference degree between a neighboring cell and the first cell, and a larger network environment evaluation value identifies a smaller signal difference degree between the neighboring cell and the first cell;
determining that the network environment evaluation value of the second cell is greater than an interference threshold; and
determining that the second cell is an interfering cell.

5. The method according to claim 4, wherein the method further comprises:
excluding the cell information of the second cell from the first measurement report.

6. The method according to claim 2 or 3, wherein the determining that the third cell is a non-interfering cell comprises:
determining that no modulo interference exists between the third cell and the first cell; and
determining that the third cell is a non-interfering cell.

7. The method according to any one of claims 1-6, wherein the terminal device is located at the first location, signal power of the first cell is first strength, the RSRP of the second cell is second strength, the RSRP of the third cell is third strength, a difference between the first strength and the second strength is less than a first strength threshold, the third strength is greater than the first strength, and a difference between the third strength and the first strength exceeds a second strength threshold.

8. The method according to any one of claims 1-7, wherein the terminal device moves to a third location, the third location falls within the signal coverage of the first cell, the second cell, and the third cell, the terminal device recamps on the first cell, modulo interference exists between the second cell and the first cell, and no modulo interference exists between the third cell and the first cell;
the RSRP of the first cell is fourth strength, the RSRP of the second cell is fifth strength, the RSRP of the third cell is sixth strength, a difference between the fourth strength and the sixth strength is less than the first strength threshold, the fifth strength is greater than the fourth strength, and a difference between the fifth strength and the fourth strength exceeds the second strength threshold; and
the method further comprises:
receiving a third measurement event from the base station, wherein the third measurement event triggers the terminal device to perform intra-RAT neighboring cell measurement;
sending a third measurement report to the base station, wherein the third measurement report comprises the cell information of the third cell and the cell information of the second cell; and
receiving a second handover indication from the base station, and handing over to the second cell according to the second handover indication.

9. The method according to any one of claims 1-8, wherein the terminal device moves to a fourth location, the fourth location falls within signal coverage of the first cell, the second cell, and a fifth cell, the terminal device recamps on the first cell, modulo interference exists between the second cell and the first cell, and modulo interference exists between the fifth cell and the first cell; and
the method further comprises:
receiving a fourth measurement event from the base station, wherein the fourth measurement event triggers the terminal device to perform intra-RAT neighboring cell measurement; and
sending a fourth measurement report to the base station, wherein the fourth measurement report does not comprise the cell information of the second cell, and the fourth measurement report does not comprise cell information of the fifth cell.

10. The method according to claim 9, wherein
the terminal device is located at the fourth location, the RSRP of the first cell is seventh strength, the RSRP of the second cell is eighth strength, and RSRP of the fifth cell is ninth strength; and
a difference between the seventh strength and the eighth strength is less than the first strength threshold, and a difference between the seventh strength and the ninth strength is less than the first strength threshold.

11. The method according to claim 9 or 10, wherein the method further comprises:
receiving a fifth measurement report from the base station, wherein the fifth measurement report triggers the terminal device to perform inter-RAT measurement;
sending a fifth measurement report to the base station, wherein the fifth measurement report comprises cell information of a sixth cell, RSRP of the sixth cell is tenth strength, the tenth RSRP is greater than the seventh strength of the first cell, and a difference between the tenth RSRP and the seventh strength exceeds the second strength threshold; and
receiving a third handover indication from the base station, and handing over to the sixth cell according to the third handover indication.

12. The method according to claim 11, wherein a priority of the sixth cell is less than that of the first cell.

13. The method according to claim 12, wherein a 5G cell, a 4G cell, a 3G cell, and a 2G cell are in descending order of priorities of the cells, and the first cell is any one of the 5G cell, the 4G cell, and the 3G cell.

14. A communication method, wherein the method is applied to a terminal device, and the method comprises:
receiving, by the terminal device, a first measurement event from a base station;
determining, through measurement based on the first measurement event, whether modulo interference exists between a currently camped cell and each of all neighboring cells;
when no modulo interference exists between at least one first neighboring cell in all the neighboring cells and the currently camped cell, comprising the at least one first neighboring cell in candidate neighboring cells;
when modulo interference exists between at least one second neighboring cell in all the neighboring cells and the currently camped cell, and a difference between RSRP of the second neighboring cell and RSRP of the currently camped cell is greater than a second strength threshold, comprising the at least one second neighboring cell in the candidate neighboring cells;
when modulo interference exists between at least one third neighboring cell in all the neighboring cells and the currently camped cell, and a difference between RSRP of the third neighboring cell and the RSRP of the currently camped cell is less than a first strength threshold, comprising the at least one third neighboring cell in interfering cells; and
uploading a first measurement report when at least one candidate neighboring cell exists, RSRP of the candidate neighboring cell is greater than the RSRP of the currently camped cell, and the RSRP of the candidate neighboring cell is greater than a first threshold, wherein the first measurement report comprises cell information of the at least one candidate neighboring cell, and the first measurement report does not comprise cell information of the interfering cell.

15. A terminal device, wherein the terminal device is configured to perform cell handover according to the method according to any one of claims 1-13 or the method according to claim 14.

16. A computer-readable storage medium, wherein the computer-readable storage medium comprises computer instructions, and when the computer instructions are run, the method according to any one of claims 1-13 or the method according to claim 14 is performed.

17. A chip system, wherein the chip system comprises an interface circuit and a processor; the interface circuit and the processor are interconnected by using a line; the interface circuit is configured to: receive a signal from a memory, and send the signal to the processor, wherein the signal comprises computer instructions stored in the memory; and when the processor executes the computer instructions, the chip system disposed in a terminal device performs the method according to any one of claims 1-13 or the method according to claim 14.
